# EUROPEAN PATENT APPLICATION

(11) **EP 4 050 127 A1**
(43) Date of publication of application: **31.08.2022**
(21) Application number: 22157846.1
(22) Date of filing: 21.02.2022
(51) Int. Cl.: C25C 1/00, C25C 3/34, C25C 7/00

(54) **ELECTROCHEMICAL EXTRACTION, SEPARATION, AND/OR PURIFICATION OF METALS**

(30) Priority: 26.02.2021 US 202163154186 P; 02.02.2022 US 202217649707
(71) Applicant: Energy & Environmental Research Center Foundation, Grand Forks, North Dakota 58202-9017 (US)
(72) Inventor: THAKARE, Jivan, Grand Forks, 58203 (US); MASUD, Jahangir, North Dakota, 58203 (US)
(74) Representative: Forresters IP LLP

(57) **Abstract**

Methods for electrochemical extraction of metals, and methods for determining electrolyte fluids suitable therefor. A method of extracting, separating, and/or purifying a method includes immersing an electrochemical cell including an anode and a cathode in a liquid including the metal to form a layer including the metal on the cathode. The immersing includes applying an electrochemical potential across the anode and cathode.

## Description

### CROSS-REFERENCE TO RELATED APPLICATION

This application claims the benefit of priority to U.S. Provisional Patent Application Serial No. 63/154,186 filed Feb. 26, 2021, the disclosure of which is incorporated herein in its entirety by reference.

### BACKGROUND

Rare earth elements (REEs), also called rare earth metals, are used in many products important to the U.S. economy and national security. The U.S. is 100% net import reliant for REEs, which puts supply chains and U.S. companies and material users at risk. To reduce the nation's vulnerability to disruptions in the supply of REEs, the U.S. Department of Energy (DOE) and several other federal agencies are funding research to identify alternative domestic sources of REEs along with developing the methods to extract and produce them.

REEs typically occur at ultra-low concentrations throughout the earth's crust distributed throughout a variety of minerals, and coal-based resources. Therefore, the recovery of these low concentration REEs from these resources is an extremely challenging task. The current state-of-the-art separation processes are energy- and chemical-intensive while offering low separation efficiency and low-concentration REEs recovery as well as being harmful to the environment.

### SUMMARY OF THE INVENTION

A method of extracting, separating, and/or purifying a metal includes immersing an electrochemical cell including an anode and a cathode in a liquid including the metal to form a layer including the metal on the cathode. The immersing includes applying an electrical potential across the anode and cathode.

A method of extracting, separating, and/or purifying a metal includes immersing an electrochemical cell including an anode including platinum and a cathode including gold in an ionic liquid including the metal to form a layer including the metal on the cathode. The immersing including applying an electrical potential across the anode and cathode. The metal is a rare earth metal. The ionic liquid includes a suspension of a solid composition including the metal. The solid composition includes coal ash.

A method of extracting, separating, and/or purifying a metal includes immersing an electrochemical cell including an anode including platinum and a cathode including gold in an ionic liquid including 1-butyl-3-methylimidazolium tetrafluoroborate (BMITF), the ionic liquid including the metal, to form a layer including the metal on the cathode. The immersing including applying an electrical potential across the anode and cathode. The metal is a rare earth metal. The liquid includes a suspension of a solid composition including the metal. The solid composition includes lignite coal ash. The layer including the metal on the cathode includes an amount of the metal that is 20 wt% to 50 wt% of the metal originally present in the liquid including the metal.

A method of determining whether a liquid including a metal is suitable for use in an aspect of the method of extracting, separating, and/or purifying a metal described herein includes collecting a cyclic voltammogram of the liquid including the metal. The method also includes selecting the liquid including the metal if the cyclic voltammogram shows that the liquid including the metal has a relatively stable current without a sharp rise either at the start or at the end of the potential window, at least one reduction peak, a wide potential window, or a combination thereof.

Various aspects of the present invention provide an apparatus for performing an aspect of the method of extracting, separating, and/or purifying a metal described herein. The apparatus includes an anode and a cathode.

The invention described herein can have advantages over other methods of extracting, separating, and/or purifying, separating, and purifying metals from conventional and unconventional resources. The electrochemical method of the present invention can economically extract, separate, and/or purify one or more metals with a higher concentration of the metals and/or with a higher rate of recovery than other methods. The electrochemical method of the present invention can be used as a stand-alone method or in combination with other methods. The electrochemical method of the present invention can be tuned, such as via electrochemical potential, to selectively extract, separate, and/or purify one or more metals in preference to one or more other metals. The electrochemical method of the present invention can extract, separate, and/or purify metals at a higher rate of recovery than other methods. The electrochemical method of the present invention can be more environmentally benign than other methods. The electrochemical method of the present invention can be performed at a lower temperature than other methods. The electrochemical method of the present invention can be powered at least in part or in whole by renewable energy.

### BRIEF DESCRIPTION OF THE FIGURES

The drawings illustrate generally, by way of example, but not by way of limitation, various aspects of the present invention.
FIG. 1 illustrates rare earth element concentrations in lignite coal ash solid suspensions in various liquids.
FIG. 2 illustrates a three-electrode electrochemical cell used for a preliminary analysis of various liquids for suitability as an electrolyte for electrochemical extraction of rare earth elements.
FIG. 3 illustrates a cyclic voltammogram of a suspension of lignite coal ash in CYANEX (LCA@CYANEX).
FIG. 4 illustrates a cyclic voltammogram of a suspension of lignite coal ash in aqueous acid (LCA@AA).
FIG. 5 illustrates a cyclic voltammogram of a suspension of lignite coal ash in an ionic liquid (LCA@IL).
FIG. 6 illustrates a schematic of an electrochemical method for extracting, separating, and/or purifying rare earth elements.
FIG. 7 illustrates chronoamperometry of a suspension of lignite coal ash in an ionic liquid (LCA@IL) for 1 hour each at various potentials.
FIG. 8 illustrates photographs of REEs deposited via an electrochemical method on gold substrates after greater than 12 hours of acid digestion for quantification of the extracted metals by ICP-MS method.
FIG. 9 illustrates a chronoamperometry curve at -0.4 V for 4-hours for a lignite coal ash suspension in an ionic liquid (LCA@IL).
FIG. 10 illustrates pictures of rare earth elements deposited on the front and back side of a 4-cm² gold substrate from LCA@IL using a chronoamperometry method at -0.4 V for 4 hours.
FIG. 11 illustrates the percent recovery of various rare earth elements from a suspension of lignite coal ash in an ionic liquid (LCA@IL).
FIG. 12 illustrates percent yield of various rare earth elements from a suspension of lignite coal ash in an ionic liquid (LCA@IL).
FIG. 13 illustrates the recovery rate of various rare earth elements from a suspension of lignite coal ash in an ionic liquid (LCA@IL).
FIG. 14 illustrates a system for recovery of REEs using selective electrochemical oxidation.

### DETAILED DESCRIPTION OF THE INVENTION

Reference will now be made in detail to certain aspects of the disclosed subject matter. While the disclosed subject matter will be described in conjunction with the enumerated claims, it will be understood that the exemplified subject matter is not intended to limit the claims to the disclosed subject matter.

Throughout this document, values expressed in a range format should be interpreted in a flexible manner to include not only the numerical values explicitly recited as the limits of the range, but also to include all the individual numerical values or sub-ranges encompassed within that range as if each numerical value and sub-range is explicitly recited. For example, a range of "about 0.1% to about 5%" or "about 0.1% to 5%" should be interpreted to include not just about 0.1% to about 5%, but also the individual values (e.g., 1%, 2%, 3%, and 4%) and the sub-ranges (e.g., 0.1% to 0.5%, 1.1% to 2.2%, 3.3% to 4.4%) within the indicated range. The statement "about X to Y" has the same meaning as "about X to about Y," unless indicated otherwise. Likewise, the statement "about X, Y, or about Z" has the same meaning as "about X, about Y, or about Z," unless indicated otherwise.

In this document, the terms "a," "an," or "the" are used to include one or more than one unless the context clearly dictates otherwise. The term "or" is used to refer to a nonexclusive "or" unless otherwise indicated. The statement "at least one of A and B" or "at least one of A or B" has the same meaning as "A, B, or A and B." In addition, it is to be understood that the phraseology or terminology employed herein, and not otherwise defined, is for the purpose of description only and not of limitation. Any use of section headings is intended to aid reading of the document and is not to be interpreted as limiting; information that is relevant to a section heading may occur within or outside of that particular section.

In the methods described herein, the acts can be carried out in any order without departing from the principles of the invention, except when a temporal or operational sequence is explicitly recited. Furthermore, specified acts can be carried out concurrently unless explicit claim language recites that they be carried out separately. For example, a claimed act of doing X and a claimed act of doing Y can be conducted simultaneously within a single operation, and the resulting process will fall within the literal scope of the claimed process.

The term "about" as used herein can allow for a degree of variability in a value or range, for example, within 10%, within 5%, or within 1% of a stated value or of a stated limit of a range, and includes the exact stated value or range.

The term "substantially" as used herein refers to a majority of, or mostly, as in at least about 50%, 60%, 70%, 80%, 90%, 95%, 96%, 97%, 98%, 99%, 99.5%, 99.9%, 99.99%, or at least about 99.999% or more, or 100%. The term "substantially free of" as used herein can mean having none or having a trivial amount of, such that the amount of material present does not affect the material properties of the composition including the material, such that about 0 wt% to about 5 wt% of the composition is the material, or about 0 wt% to about 1 wt%, or about 5 wt% or less, or less than, equal to, or greater than about 4.5 wt%, 4, 3.5, 3, 2.5, 2, 1.5, 1, 0.9, 0.8, 0.7, 0.6, 0.5, 0.4, 0.3, 0.2, 0.1, 0.01, or about 0.001 wt% or less, or about 0 wt%.

The term "alkyl" as used herein refers to straight chain and branched alkyl groups and cycloalkyl groups having from 1 to 40 carbon atoms, 1 to about 20 carbon atoms, 1 to 12 carbons or, in some aspects, from 1 to 8 carbon atoms. Examples of straight chain alkyl groups include those with from 1 to 8 carbon atoms such as methyl, ethyl, n-propyl, n-butyl, n-pentyl, n-hexyl, n-heptyl, and n-octyl groups. Examples of branched alkyl groups include, but are not limited to, isopropyl, iso-butyl, sec-butyl, t-butyl, neopentyl, isopentyl, and 2,2-dimethylpropyl groups. As used herein, the term "alkyl" encompasses n-alkyl, isoalkyl, and anteisoalkyl groups as well as other branched chain forms of alkyl. Representative substituted alkyl groups can be substituted one or more times with any of the groups listed herein, for example, amino, hydroxy, cyano, carboxy, nitro, thio, alkoxy, and halogen groups.

### Method of extracting, separating, and/or purifying a metal.

Various aspects provide a method of extracting, separating, and/or purifying a metal. The method includes immersing an electrochemical cell including an anode and a cathode in a liquid including the metal to form a layer including the metal on the cathode. The immersing includes applying an electrical potential (i.e., an external DC electrical potential) across the anode and cathode. The method can be a batch process or a continuous process.

The metal in the liquid can be any suitable metal that can form a layer including the metal on the cathode using the method described herein. The metal can be in the form of an ion of the metal, a compound including the metal, an oxide including the metal, a complex including the metal, a salt including the metal, the metal is in an elemental form, or a combination thereof. The metal can include a precious metal, a rare earth metal, or a combination thereof. The metal can include a coinage group metal (e.g., gold, silver, or a combination thereof), a platinum group metal (e.g., ruthenium, rhodium, palladium, osmium, iridium, platinum, or a combination thereof. The metal can include a rare earth metal, such as cerium, dysprosium, erbium, europium, gadolinium, holmium, lanthanum, lutetium, neodymium, praseodymium, promethium, samarium, scandium, terbium, ytterbium, yttrium, thulium, or a combination thereof.

The liquid can include a suspension of a solid composition including the metal, such as a homogeneous suspension. The solid composition can be a particulate solid composition, such as having an average particle size by mass (D₅₀) of 0.1 nm or less, or 0.1 nm to 50 mm, or less than, equal to, or greater than 0.1 nm, 0.5, 1, 5, 10, 50, 100, 500 nm, 1 micron, 5, 10, 50, 100, 500 microns, 1 mm, 5, 10, 15, 20, 25, 30, 40, or 50 mm. The D₅₀ can be less than 1 mm. The solid composition can be any suitable solid composition that includes the metal. The solid composition including the metal can include coal, coal by-product, coal ash, lignite coal ash, ore, rock, recycled materials (e.g., hard drives, fluorescent lightbulbs, electronic waste, and the like), placer sand deposits, phosphate mine materials, mineral/metal acidic mine drainage, bauxite legacy impoundment materials, biomass, a critical mineral, or a combination thereof. Examples of coal and coal-by-products can include run-of-mine coal, coal refuse (e.g., mineral matter that is removed from coal), clay/sandstone over/under-burden materials, ash (e.g., coal combustion or gasification residuals), aqueous effluents such as acid mine drainage (AMD) from a coal mine, associated solids and precipitates resulting from AMD treatment, or a combination thereof. The solid composition can include coal. The solid composition can include coal ash, such as lignite coal ash. The solid composition can include a critical mineral that includes the metal to be separated, purified, and/or extracted. Critical minerals can include nonfuel minerals or materials that are essential to our modern economy and national security and that have a supply chain vulnerable to disruption. Examples of critical minerals, or of metals found in critical minerals, can include bauxite (includes aluminum), beryllium, bismuth, cesium, chromium, cobalt, fluorspar (includes calcium), gallium, germanium, hafnium, indium, lithium, magnesium, manganese, niobium, platinum group metals, potash (includes potassium), the rare earth elements group, rhenium, rubidium, scandium, strontium, tantalum, tin, titanium, tungsten, uranium, vanadium, zirconium, or a combination thereof.

The layer including the metal that is formed on the cathode during the method can include the metal in any suitable form, such as in an elemental form, as a metal oxide, a compound including the metal, a complex including the metal, a salt including the metal, or a combination thereof.

The anode can include graphite, platinum, an alloy thereof, or a combination thereof, with the entire anode made of this material or the material forming a coating or plating on the electrode. The anode can include platinum. The cathode can include gold, carbon paper, glassy carbon, indium tin oxide (ITO), fluoride-doped tin oxide (FTO), copper, an alloy thereof, or a combination thereof, with the entire cathode made of this material or the material forming a coating or plating on the electrode. The cathode can include gold. The electrochemical cell can optionally further include a reference electrode. The reference electrode can be formed of any suitable material, such as any material described herein as suitable for the anode. The reference electrode can include platinum.

The method can further include combining the solid composition with the liquid. In other aspects, the liquid and the solid composition are combined prior to the onset of the method. The liquid including the solid composition is an electrolyte for the electrochemical cell during immersion of the anode and the cathode therein with the electrical potential applied to the anode and the cathode. The liquid that includes the solid composition can be any suitable liquid that acts as a suitable electrolyte for the anode and cathode while the solid composition is suspended therein.

The liquid can be an aqueous composition. The liquid can be an aqueous acid. The acid can include hydrochloric acid, sulfuric acid, phosphoric acid, or a combination thereof.

The liquid can include an ionic liquid including an ionic liquid anion and an ionic liquid cation. The ionic liquid anion can be any suitable ionic liquid anion, such as tetrafluoroborate (BF₄), hexafluorophosphate (PF₆), bis-trifluoromethanesulfonimide (NTf₂), trifluoromethanesulfonate (OTf), dicyanamide (N(CN)₂), hydrogen sulphate (HSO₄), ethyl sulphate (EtOSO₃), a tetra(C₁-C₂₀)alkylated phosphonium, or a combination thereof. The ionic liquid anion can be tetrafluoroborate. The ionic liquid cation can be any suitable ionic liquid cation, such as a (C₁-C₂₀)alkylated nitrogen-containing heterocycle, a (C₁-C₂₀)alkylated imidazolium, a (C₁-C₂₀)alkylated pyridinium, a tetra(C₁-C₂₀)alkylated ammonium, or a combination thereof. The ionic liquid cation can be 1-(C₁-C₂₀)alkyl-3-methylimidazolium, 1-ethyl-3-methyl-imidazolium (EMIM), 1-butyl-3-methyl-imidazolium (BMIM), 1-octyl-3 methyl-imidazolium (OMIM), 1-decyl-3-methyl-imidazolium(DMIM), 1-dodecyl-3-methyl-imidazolium (docecylMIM), 1-butyl-2,3-dimethylimidazolium (DBMIM), 1,3-di(N,N-dimethylaminoethyl)-2-methylimidazolium (DAMI), 1-butyl-2,3-dimethylimidazolium (BMMIM), 4-methyl-N-butyl-pyridinium (MBPy), N-octylpyridinium (C8Py), tetraethylammonium (TEA), tetrabutylammonium (TBA), or a combination thereof. The ionic liquid cation can be 1-butyl-3-methylimidazolium. The ionic liquid can include 1-butyl-3-methylimidazolium tetrafluoroborate (BMITF). The ionic liquid can form any suitable proportion of the liquid, such as 0.001 wt% to 100 wt%, 50 wt% to 100 wt%, 80 wt% to 100 wt%, or less than, equal to, or greater than 0.001 wt%, 0.01, 0.1, 1, 2, 3, 4, 5, 6, 8, 10, 15, 20, 25, 30, 35, 40, 45, 50, 55, 60, 65, 70, 75, 80, 82, 84, 86, 88, 90, 91, 92, 93, 94, 95, 96, 97, 98, 99, 99.9, 99.99, 99.999, or 100 wt%.

The liquid (i.e., the electrolyte) can be substantially free of water, or the liquid can include at least some water. For example, the liquid can include 0 wt% water, or the liquid can include 0 wt% to 50 wt% water, or 0 wt% to 20 wt% water, or 0 wt% to 10 wt% water, or less than 50 wt% water but greater than 0 wt%, 0.001, 0.005, 0.01, 0.05, 0.1, 0.5, 1, 1.5, 2, 3, 4, 5, 6, 7, 8, 9, 10, 12, 14, 16, 18, 20, 25, 30, 35, 40, or 45 wt% water.

The liquid (e.g., the ionic liquid, the aqueous liquid, or another liquid) can include an acid. The acid can include hydrochloric acid, sulfuric acid, phosphoric acid, or a combination thereof. The acid can include hydrochloric acid. Any suitable wt% of the liquid can be the acid. For example, the acid can be 0 wt% of the liquid, or less than 1 wt% of the liquid, or less than 10 wt% of the liquid. The acid can be 0 wt% to 40 wt% of the liquid, or 0 wt% to 20 wt%, or 0 wt% to 10 wt%, or less than 40 wt% but greater than or equal to 0 wt%, 0.001, 0.005, 0.01, 0.05, 0.1, 0.5, 1, 1.5, 2, 2.5, 3, 4, 5, 6, 7, 8, 9, 10, 12, 14, 16, 18, 20, 25, 30, or 35 wt%.

A cyclic voltammogram of the liquid including the metal (e.g., using a platinum cathode and a platinum anode, and optionally a platinum reference electrode) can be useful for determining whether the liquid including the metal will be effective in the method described herein. The cyclic voltammogram of the liquid including the metal can have a relatively stable current without a sharp rise either at the start or end of the potential window, such as at the start of the potential window, at the end of the potential window, or a combination thereof. The cyclic voltammogram of the liquid including the metal can have at least one reduction peak, two or more reduction peaks, or four reduction peaks. The cyclic voltammogram of the liquid including the metal can include a wide potential window, such as a potential window of -10 V to 10 V, -5 V to 5 V, or less than, equal to, or greater than less than, equal to, or greater than -10 V, -9.5, -9, -8.5, -8, -7.5, -7, -6.5, -6, -5.5, -5, -4.5, -4, -3.5, -3, -2.5, -2, -1.5, -1, -0.5, 0, 0.5, 1, 1.5, 2, 2.5, 3, 3.5, 4, 4.5, 5, 5.5, 6, 6.5, 7, 7.5, 8, 8.5, 9, 9.5, or 10 V. The breadth of the potential window (i.e., the absolute value of maximum minimum V) can be 0.1 V to 20 V, 2 V to 8 V, 3 V to 7 V, 4 V to 6 V, or less than, equal to, or greater than 0.1 V, 0.5, 1, 1.5, 2, 2.5, 3, 3.5, 4, 4.5, 5, 5.5, 6, 6.5, 7, 7.5, 8, 8.5, 9, 9.5, 10, 10.5, 11, 11.5, 12, 12.5, 13, 13.5, 14, 14.5, 15, 15.5, 16, 16.5, 17, 17.5, 18, 18.5, 19, 19.5, or 20 V or more.

The electrical potential applied across the anode and cathode can be any suitable electrical potential that causes the metal to form a layer on the cathode. The electrical potential can be -5 V to 5 V, -0.4 to -2.0 V, or less than, equal to, or greater than -10 V, -9.5, -9, -8.5, -8, - 7.5, -7, -6.5, -6, -5.5, -5, -4.5, -4, -3.5, -3, -2.5, -2, -1.5, -1, -0.5, 0, 0.5, 1, 1.5, 2, 2.5, 3, 3.5, 4, 4.5, 5, 5.5, 6, 6.5, 7, 7.5, 8, 8.5, 9, 9.5, or 10 V. The electrical potential can be a constant electrical potential. The electrical potential can be a variable electrical potential.

The electrical potential can be applied across the anode and the cathode for any suitable duration, such as for a duration of 1 second to 1 month, 0.1 h to 24 h, 1 h to 10 h, 2 h to 8 h, or less than, equal to, or greater than 1 s, 30 s, 1 min, 2, 5, 10, 20, 30, 45 min, 1 h, 2, 4, 6, 8, 10, 12, 14, 16, 18, 20, 22 h, 1 d, 2, 4, 6 d, 1 week, 2, 3, or 4 weeks or more.

During the application of the electrical potential across the anode and the cathode, the liquid including the metal (and the anode and cathode immersed therein) can have any suitable temperature, such as a temperature of room temperature to the boiling or degradation point of the liquid, such as room temperature to 300 °C, room temperature to 200 °C, 50 °C to 150 °C, 80 °C to 120 °C, or less than, equal to, or greater than room temperature, 20 °C, 25, 30, 40, 50, 60, 70, 80, 90, 100, 110, 120, 130, 140, 150, 160, 170, 180, 190, 200, 250, or 300 °C or more.

The method can include selectively extracting, separating, and/or purifying one or more metals from the liquid including the metal (e.g., extracting, separating, and/or purifying one or more metals preferentially over one or more other metals). For example, the method can include selectively extracting, separating, and/or purifying one or more rare earth metals, or one or more precious metals, from the liquid including the metal. The selective extraction, separation, and/or purification can include applying one or more electrical potentials across the anode and cathode that favor formation of the layer on the cathode including one or more metals in preference to one or more other metals.

The layer including the metal on the cathode can include an amount of the metal that is 0.001 wt% to 100 wt% of the metal originally present in the liquid including the metal (e.g., as determined in a batch-process aspect of the method). For example, the layer including the metal on the cathode can include an amount of the metal that is 1 wt% to 80 wt%, 5 wt% to 70 wt% of the metal originally present in the liquid including the metal, or 20 wt% to 50 wt%, or less than, equal to, or greater than 0.001 wt%, 0.005, 0.01, 0.05, 0.1, 0.5, 1, 2, 3, 4, 5, 6, 8, 10, 12, 14, 16, 18, 20, 25, 30, 35, 40, 45, 50, 55, 60, 65, 70, 75, 80, 85, 90, 91, 92, 93, 94, 95, 96, 97, 98, 99, 99.9, 99.99, 99.999, or 100 wt% of the metal originally present in the liquid including the metal.

The layer including the metal formed on the cathode can be formed on the cathode with a recovery density rate of the metal of 0.0001 µg/m²-hr to 5 mg/m²-hr, or 0.0001 µg/m²-hr to 1 mg/m²-hr, or less than, equal to, or greater than 0.0001 µg/m²-hr, 0.0005, 0.001, 0.005, 0.01, 0.05, 0.1, 0.2, 0.3, 0.4, 0.5, 0.6, 0.7, 0.8, 0.9, 1, 1.5, 2, 2.5, 3, 3.5, 4, 4.5, 5, 10, 20, 50, 100, 150, 200, 250, 500, 750 µg/m²-hr, 1 mg/m²-hr, 1.5, 2, 2.5, 3, 3.5, 4, 4.5, or 5 µg/m²-hr.

The method can further including removing the layer including the metal from the cathode. Any suitable technique can be used to remove the layer including the metal from the cathode, such as acid digestion (e.g., immersing the layer including the metal in acid to dissolve the layer including the metal). The removing can including dissolving the layer and/or the metal in the layer using an acid including hydrochloric acid, sulfuric acid, phosphoric acid, or a combination thereof. The method can further include purifying the metal removed from the cathode using any suitable technique.

The method can further include determining whether the liquid including the metal is suitable for use in the method prior to immersing the anode and cathode in the liquid including the metal. For example, the method can further include collecting a cyclic voltammogram of the liquid including the metal and using the cyclic voltammogram to determine whether the liquid including the metal is suitable, as further described below.

### Method of determining whether a liquid including the metal is suitable for use in the method of extracting, separating, and/or purifying a metal.

Various aspects provide a method of determining whether a liquid including a metal is suitable for use in the method of extracting, separating, and/or purifying a method described herein. The method can include collecting a cyclic voltammogram of the liquid including the metal (e.g, using a platinum cathode and a platinum anode, and optionally a platinum reference electrode). The method can include selecting the liquid including the metal (e.g., selecting for use in the method of extracting, separating, and/or purifying a metal) if the cyclic voltammogram shows that the liquid including the metal has a relatively stable current without a sharp rise either at the start or end of the potential window, at least one reduction peak, a wide potential window, or a combination thereof.

The cyclic voltammogram of the liquid including the metal can be useful for determining whether the liquid including the metal will be effective in the method described herein. For example, the method can include selecting the liquid including the metal if the cyclic voltammogram of the liquid including the metal has a relatively stable current without a sharp rise either at the start or end of the potential window. The method can include selecting the liquid including the metal if the cyclic voltammogram of the liquid including the metal has at least one reduction peak, two or more reduction peaks, or four reduction peaks. The method can include selecting the liquid including the metal if the cyclic voltammogram of the liquid including the metal includes a wide potential window, such as a potential window of -10 V to 10 V, -5 V to 5 V, or less than, equal to, or greater than less than, equal to, or greater than -10 V, - 9.5, -9, -8.5, -8, -7.5, -7, -6.5, -6, -5.5, -5, -4.5, -4, -3.5, -3, -2.5, -2, -1.5, -1, -0.5, 0, 0.5, 1, 1.5, 2, 2.5, 3, 3.5, 4, 4.5, 5, 5.5, 6, 6.5, 7, 7.5, 8, 8.5, 9, 9.5, or 10 V. The breadth of the potential window (i.e., the absolute value of maximum minimum V) can be 0.1 V to 20 V, 2 V to 8 V, 3 V to 7 V, 4 V to 6 V, or less than, equal to, or greater than 0.1 V, 0.5, 1, 1.5, 2, 2.5, 3, 3.5, 4, 4.5, 5, 5.5, 6, 6.5, 7, 7.5, 8, 8.5, 9, 9.5, 10, 10.5, 11, 11.5, 12, 12.5, 13, 13.5, 14, 14.5, 15, 15.5, 16, 16.5, 17, 17.5, 18, 18.5, 19, 19.5, or 20 V or more.

### Apparatus for performing the method of extracting, separating, and/or purifying a metal.

Various aspects provide an apparatus for performing the method of extracting, separating, and/or purifying a metal described herein. The apparatus can include the electrochemical cell including the anode (e.g., including platinum or another suitable material) and cathode (e.g., including gold or another suitable material). The electrochemical cell can optionally include a reference electrode (e.g., including platinum).

### Examples

Various aspects of the present invention can be better understood by reference to the following Examples which are offered by way of illustration. The present invention is not limited to the Examples given herein.

Gold foil and carbon fiber paper were used as a cathode electrode for the electrodeposition. The gold foil was 0.025 mm thick with a purity 99.985% and was purchased from Alfa Aesar. Carbon Fiber Paper (CFP) was purchased from FuelCellStore. Prior to use, gold foil and CFP were sonicated successively in deionized water, IPA, and DI water for 10 mins and dried in the oven.

### Example 1. Lignite coal ash (LCA) solution preparation.

Three types of LCA solutions were utilized in this study. In the Examples, an "LCA solution" is a suspension of solid LCA particles in a liquid.

LCA solution in aqueous acid (LCA@AA): LCA@AA was prepared by mixing 12-g of Falkirk ash (collected from Great River Energy's Coal Creek Power Station that burns coal from the Falkirk mine) with 180 mL of 2.0M hydrochloric acid (1 solid: 15 liquid ratio) in a 200 mL HDPE bottle and put on an end-over-end rotator for 1-hour. The mixture was then filtered through a 0.45 µm filter and the filtered extract was retained for analysis.

LCA solution in CYANEX (LCA@CYANEX): LCA@CYANEX was prepared by mixing 40-mL of the LCA@AA with 40-mL (1:1 ratio) of 0.2M CYANEX in hexane. The mixture was stirred vigorously for 10-minutes, then transferred to a separatory funnel to separate the organic CYANEX phase and the aqueous acidic phase.

LCA solution in ionic liquid (LCA@IL): To improve the electrochemical efficiency, the LCA@AA was injected with IL (1-butyl-3-methylimidazolium tetrafluoroborate). LCA@IL was prepared by mixing LCA@AA with IL in ratio of at least 1:3. The LCA@IL was then heated at 100°C to 110°C for 3-hours to evaporate all the aqueous portions.

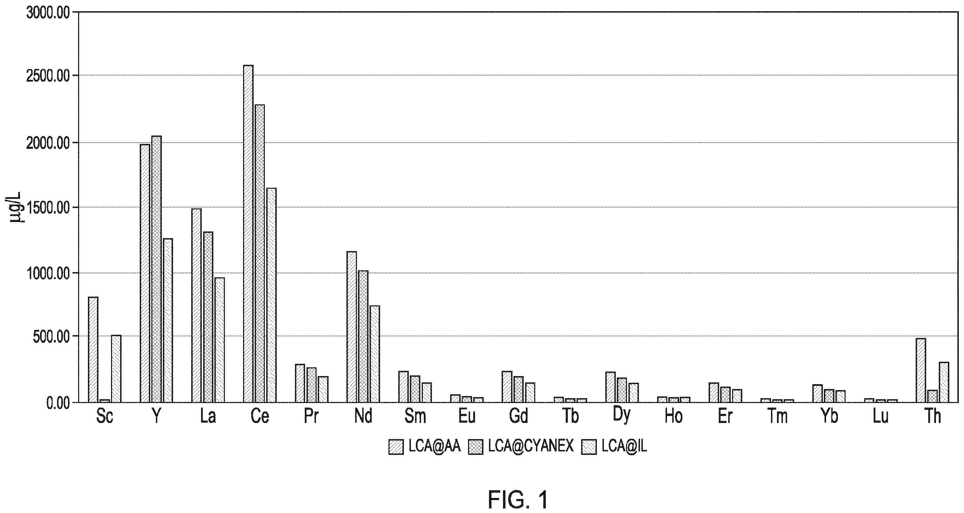

Rare earth element (REE) concentration in the three LCA solutions is presented in FIG. 1.

### Example 2. Preliminary electrochemical analysis of LCA solutions.

The working principle of the novel electrochemical extraction of REEs (EEREE) process is based on the reduction of REEs in LCA solution via electrochemical transport of electrons and ions in the LCA solution. Therefore, the LCA solution should be able to attain at least one reduction peak and an acceptable potential window for the feasibility of recovering REEs from LCA. As a result, the suitability of the LCA solutions was first determined by preliminary electrochemical analysis before utilizing the solution for REE recovery via the EEREE process.

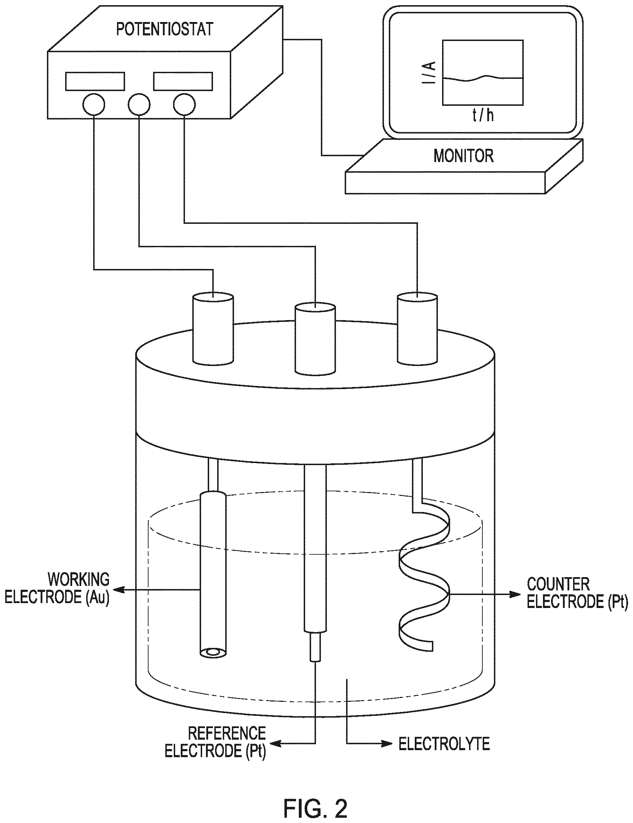

A three-electrode cell was used for a preliminary analysis-via cyclic voltammetry (CV)-of the LCA solution as present in FIG. 2 with Pt was used as a counter, reference, and working electrode.

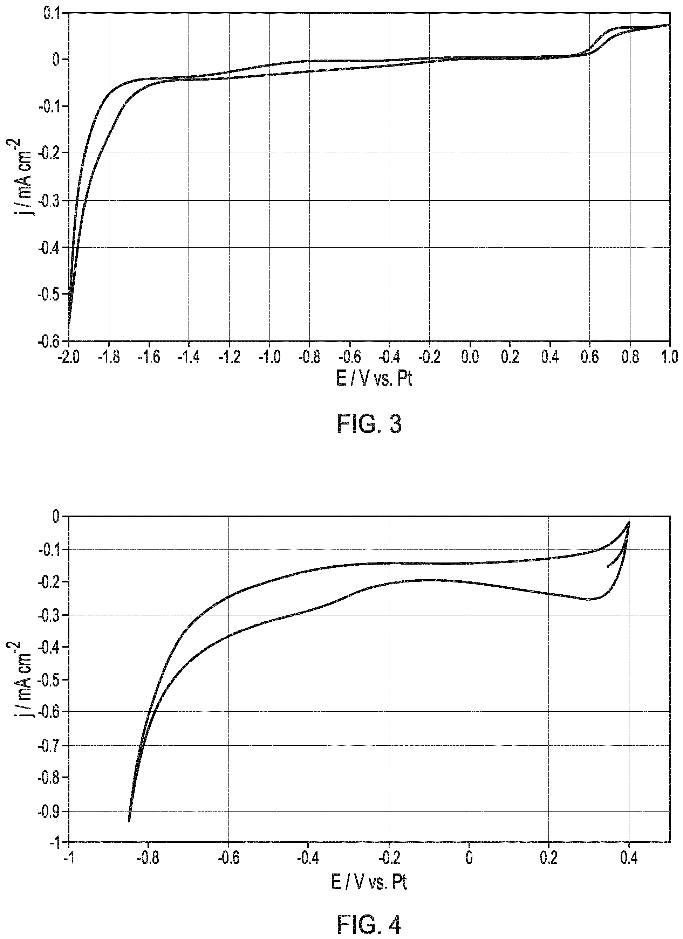

LCA@CYANEX as an Electrolyte: 15-ml of LCA@CYANEX was used as an electrolyte to determine its suitability for REE recovery via preliminary electrochemical analysis. The CV curve of the preliminary electrochemical analysis is presented in FIG. 3.

From the CV curve in FIG. 3, it is evident that there is no definite reduction peak for the LCA@CYANEX electrolytic solution. In addition, the LCA@CYANEX could not draw enough current except a sharp cathodic current after -1.5 V. The sharp cathodic current increase was potentially due to the degradation/electrolysis of CYANEX. The low double-layer charging current from 0 to -1.5 V also represents that the electrolyte solution has extremely low ionic conductivity. The lack of any reduction peak and low ionic conductivity of the solution makes LCA@CYANEX unsuitable for the EEREE process.

LCA@AA as an Electrolyte: 15-ml of LCA@AA was used for preliminary electrochemical analysis. The CV curve of the preliminary electrochemical analysis is presented in FIG. 4.

Unlike LCA@CYANEX, a wider double layer charging current and narrower potential were observed on the CV curve of the LCA@AA sample in FIG. 4 with a reduction peak at -0.4 V. The higher double-layer charging represents that the LCA@AA electrolyte solution has better ionic conductivity than LCA@CYANEX. A sharp rise in cathodic current after -0.5 V was due to the water electrolysis. This competing hydrogen (H₂) evolution reaction would make EEREE extremely inefficient.

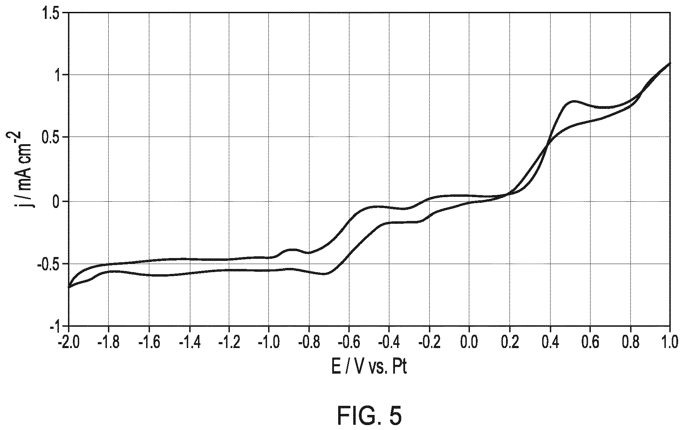

LCA@IL as an Electrolyte: 20-ml of the LCA@IL was used for preliminary electrochemical analysis. The ionic liquid used was 1-butyl-3-methylimidazolium tetrafluoroborate (BMITF). A 15-ml of 1-butyl-3-methylimidazolium tetrafluoroborate (BMITF) ionic liquid was transferred into an electrochemical cell. To remove any dissolved oxygen, N₂-gas was purged through the BMITF ionic liquid solution for 30 minutes. After that, the BMITF solution was heated until it reached the temperature of 110 °C and maintained the same temperature. Finally, 5-ml of REEs containing LCA@AA solution was slowly added to BMITF solution and heated the composite solution at 100-110 °C for about 2 hours to remove all the water from the composite solution. The final solution was referred to as LCA@IL. Then, a CV was carried out at 10 mV s⁻¹ at 110 °C in the LCA@IL solution. The CV curve of the LCA@IL sample is presented in FIG. 5.

As compared to the LCA@CYANEX and LCA@AA solutions, a wider potential window were observed on the CV curve of LCA@IL in FIG. 5. In addition, four reduction peaks at -0.26, -0.7, -1.5 and -1.9 V were observed. Based on these four reduction peaks, four deposition potentials were identified as -0.4, -0.8, -1.6, and -2.0 V respectively. Unlike both LCA@CYANEX and LCA@AA CV's the cathodic current is very stable without any sharp rise throughout the potential window. This behavior of the CV validated the suitability and stability of the LCA@IL electrolyte solution.

Based on this preliminary analysis the LCA@IL was chosen to be used as an electrolyte for proof-of-concept (POC) testing, validation, and scale-up experiments for the EEREE process.

### Example 3. EEREE proof-of-concept (POC) testing.

The proof-of-concept testing for the EEREE process was designed based on the preliminary electrochemical analysis which determined i) LCA@IL as an acceptable electrolyte for the EEREE process, and ii) four potentials at -0.4, -0.8, -1.6, and -2.0 V (which were overpotentials from the reduction peak) for REE recovery.

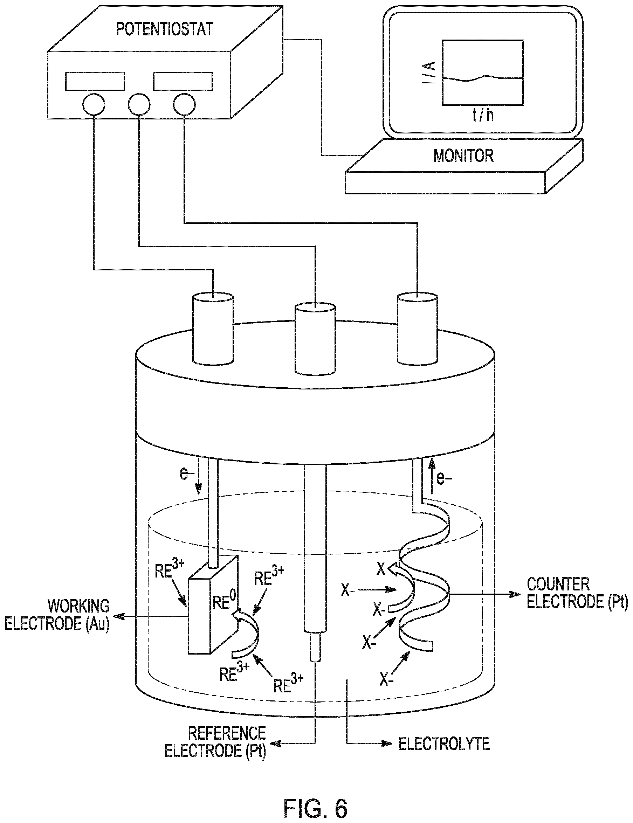

Based on the four reduction peaks, chronoamperometry experiments were performed in N₂-saturated LCA @ IL electrolyte at a constant voltage using the different potentials of -0.4, -0.8, -1.6, and -2.0 V for 1-hour each. A schematic of the EEREE process is presented in FIG. 6, which is a three-electrode electrochemical cell with gold (Au) substrates, spiral Platinum (Pt), and Pt wire were used as working, counter and reference electrodes, respectively. The electrodeposition of the REEs from Lignite Coal Ash (LCA) solution was carried out Chronoamperometric method (i.e., constant voltage). It was hypothesized that the anions (x⁻) from the LCA@IL solution migrates towards the anode and oxidized (x) to liberates electrons under the potential difference. The liberated electron is then traveling through an external circuit from the anode to the cathode, where it reduces the REE ions (RE³⁺) to REE metals.

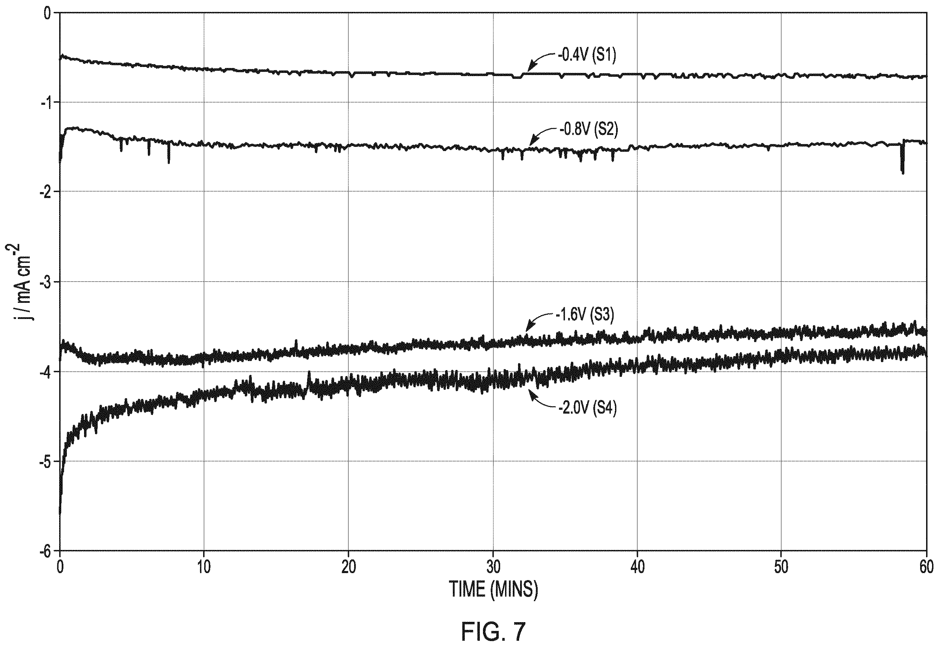

The LCA@IL solution was at 110 °C and stirred continuously at 1000 rpm during the electrodeposition. FIG. 7 shows the Chronoamperometry graphs for all four experiments. The current density response at each of the -0.4, -0.8, -1.6, and -2.0 V constant potential was about -0.68, -1.52, -3.66, and -4.04 mA/cm², respectively. This current response strongly inferred the electrochemical activity during these experiments. Besides, the formation of a uniform layer of REE deposits was visually observed during each of the experiments.

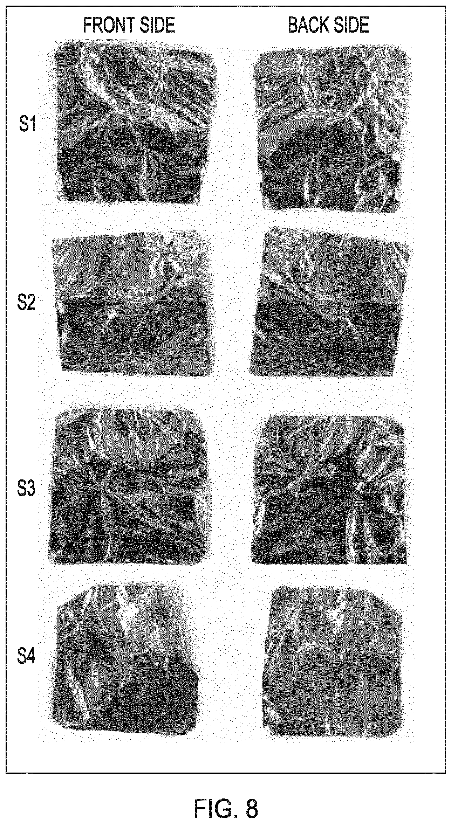

After the experiments, the REEs deposited substrates were carefully rinsed with ethanol, and then water to wash off any excess IL. The REE deposited substrates were then digested in an aqueous acid solution to release REEs from the substrate and the digested acid solution is then analyzed using IPC-MS to determine the recovery. However, the digestion of the deposited REEs deposited on the Au substrate-required for the analysis via ICP-MS-was found to be challenging. The REEs seems to have strongly bonded on the substrate, therefore traditional acid digestion could not fully digest/release REEs from the substrate. FIG. 8 illustrates the pictures of the REEs deposited on Au substrates (samples S1-S4) after more than 12-hours of digestion in 0.5 M H₂SO₄ solution. It can be seen that a significant amount of REEs is still remained on the surface of the substrate (black deposit in the rectangle). As a result, the REEs recovery reported herein for this particular POC testing is less than the actual amount. The ICP-MS analysis of the partially digested samples is presented in Table 1.

**Table 1. Percent recovery for each of the REEs via the EEREE process from LCA.**

| **REE** | **Sample** | | | | **Cumulative Recovery** |
|---|---|---|---|---|---|
| | **S1** | **S2** | **S3** | **S4** | |
| **Sc** | 0.0002% | 0.0004% | 0.0009% | 0.0064% | 0.01% |
| **Y** | 0.0000% | 0.0001% | 0.0036% | 0.0015% | 0.01% |
| **La** | 0.0000% | 0.0001% | 0.0181% | 0.0117% | 0.03% |
| **Ce** | 0.0158% | 0.0023% | 0.0505% | 0.0351% | 0.10% |
| **Pr** | 0.0000% | 0.0001% | 0.0547% | 0.0314% | 0.09% |
| **Nd** | 0.0000% | 0.0001% | 0.0545% | 0.0306% | 0.09% |
| **Sm** | 0.0000% | 0.0001% | 0.0548% | 0.0300% | 0.09% |
| **Eu** | 0.0001% | 0.0001% | 0.0575% | 0.0536% | 0.11% |
| **Gd** | 0.0004% | 0.0002% | 0.0365% | 0.0181% | 0.06% |
| **Tb** | 0.0003% | 0.0002% | 0.0404% | 0.0208% | 0.06% |
| **Dy** | 0.0000% | 0.0001% | 0.0308% | 0.0138% | 0.04% |
| **Ho** | 0.0001% | 0.0002% | 0.0266% | 0.0134% | 0.04% |
| **Er** | 0.0000% | 0.0001% | 0.0197% | 0.0093% | 0.03% |
| **Tm** | 0.0003% | 0.0004% | 0.0159% | 0.0114% | 0.03% |
| **Yb** | 0.0001% | 0.0002% | 0.0105% | 0.0051% | 0.02% |
| **Lu** | 0.0003% | 0.0005% | 0.0083% | 0.0073% | 0.02% |
| **Th** | 0.0003% | 0.0015% | 0.0037% | 0.0028% | 0.01% |
| **Total REE** | 0.0041% | 0.0008% | 0.0287% | 0.0184% | 0.05% |

### Example 4. EEREE proof-of-concept validation and scale-up.

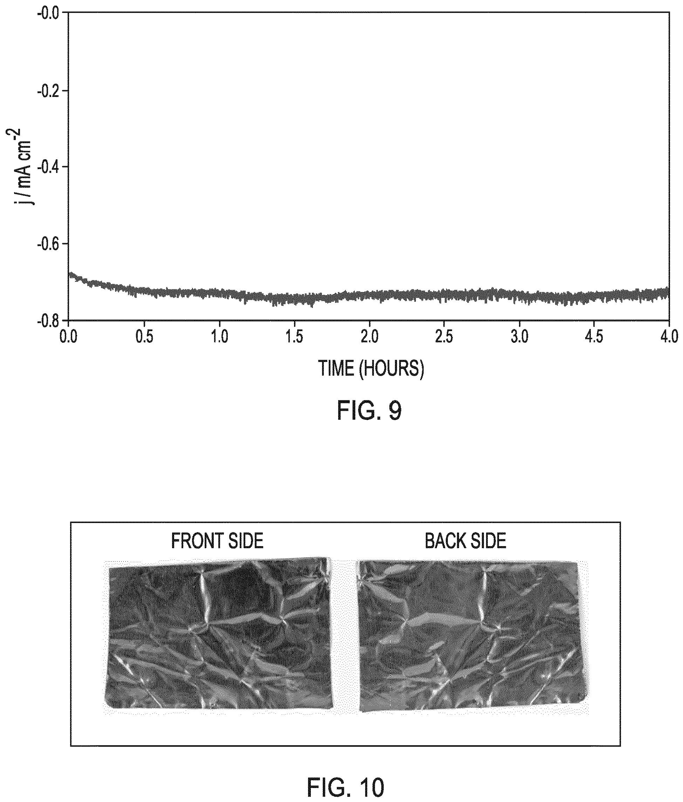

An experiment was designed with the objective of EEREE process proof-of-concept validation and scale-up. A chronoamperometry experiment was performed for 4-hours at -0.4 V potential in N₂-saturated electrolyte (LCA@IL) on 8-cm² (4 cm² on each side) substrates at 100 °C. The chronoamperometry graph in FIG. 9 shows the current density of about -0.72 mA/cm², which was similar to the current density observed during the proof-of-concept testing experiment at -0.4 V (S1). This successfully demonstrates the experimental validation of the scale-up of the EEREE process.

After the experiment, the REE deposited Au substrate was rinsed with ethanol, and then water to wash off any excess IL. Pictures of the REE deposited Au substrate are shown in FIG. 10.

As the digestion of the REEs deposited on the substrate was found to be challenging during the POC experimentation, the ICP-MS analysis for the validation and scale up experiment was performed on the LCA@IL before and after electrochemical extraction instead of the deposited REEs.

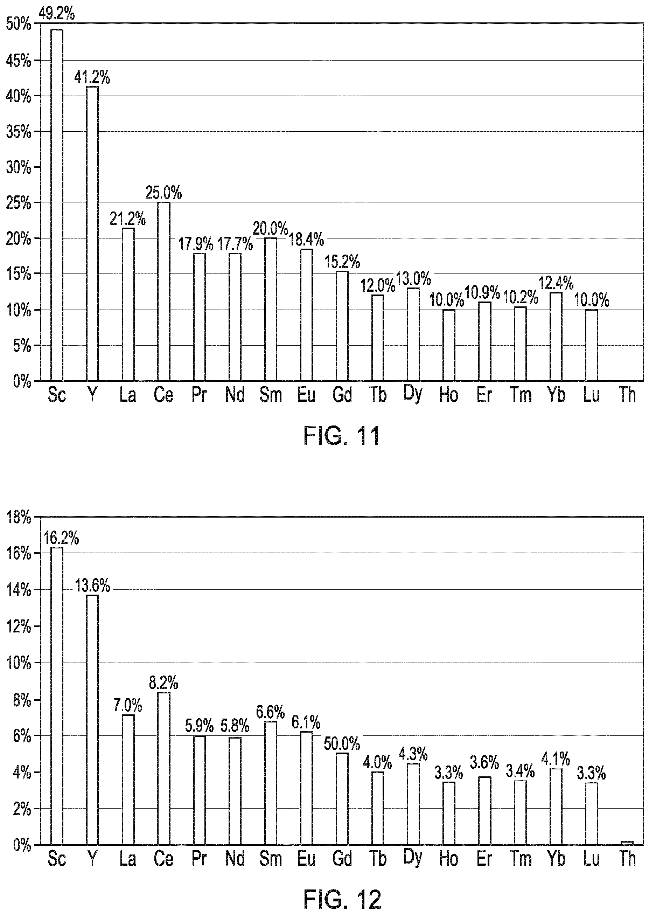

The ICP-MS analysis was used to compute the percent recovery of rare earth elements, as shown in FIG. 11, and confirmed the recovery of 26% of the total REEs from the LCA@IL solution in 4 hours at a recovery rate of 6.25% per hour, with >49% recovery for Sc and >41% recovery for Y. Out of the 17 REEs in the LCA, the recovery for the 11 REEs were found to be between 10-19%, for three REEs were found to be between 20-39%, two REEs were recovered at >40%, and no Th (0%) was recovered.

The percent yield for each of the REEs was calculated and presented in FIG. 12 with the top four REEs with a yield of 16.2 % for Sc, 13.6 % for Y, 8.2 % for Ce, and 7.0 % for La.

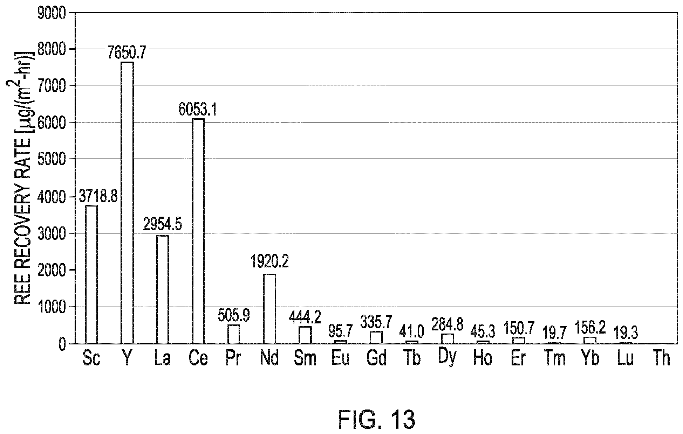

The EEREE process recovery density rate (µg/m²-hr) presented by µg of REE deposited per m² substrate area per hour for each of the REEs was calculated and presented in FIG. 13. The EEREE process recovery rate data also shows that if optimized properly, the EEREE process could be used for selective recovery high purity Sc, Y, Ce, La, and Nd and separate Th.

### Example 5. Analysis of Example 1-4.

Examples 1-4 demonstrate REE recovery of 26% in four hours at a rate of 6.5% per hour from North Dakota lignite coal ash with a minimum of 10% recovery for 16 out of the 17 REEs. The REE-electrolyte solution's potential window, current window, and ionic conductivity are important parameters for its suitability for the EEREE process. The presence of water in the REE-electrolyte solution can make the solution inefficient for the EEREE process due to the competing H₂ evolution reaction. An REE-electrolyte solution's potential window and ionic conductivity can be improved by blending it with an appropriate ionic liquid or ion conducting/enhancing organic or inorganic medium.

The EEREE process proof-of-concept was successfully demonstrated using LCA@IL. The ICP-MS analysis of the partially digested Au substrate sample and the electrochemical data showed the successful deposition of REEs on the Au substrate. Digestion of the REEs deposited on the Au substrate was found to be challenging, as the traditional acid digestion could not fully digest/release REEs from the Au substrate.

EEREE is a modular and scalable process as demonstrated by: a successful scale-up with eight times bigger substrate area and four times longer duration; the ICP-MS analysis of the LCA@IL before and after the experiment showed 26% of the REEs were successfully recovered with >49% recovery for Sc and >41% recovery for Y; out of the 17 REEs present in the LCA, 16 REEs were successfully recovered each with at least 10% recovery, 11 REEs were recovered between 10-19% recovery, three REEs were recovered between 20-39% recovery, two REEs were recovered at >40% recovery, and Th was the only REE that was not recovered.

### Example 6. Selective Electrochemical Separation of REEs.

LCA solution in aqueous acid (LCA@AA). LCA@AA was prepared by mixing 12-g of Falkirk ash (collected from Great River Energy's Coal Creek Power Station that burns coal from the Falkirk mine) with 180 mL of 6.0M hydrochloric acid (1 solid: 15 liquid ratio) in a 500 mL HDPE bottle and put on an orbital shaker for 4-hour. The mixture was then filtered through a 0.45 µm filter and the filtered extract was retained for analysis and separation.

Organic phase (OP) preparation. The OP consisted of 100 mM di(2-ethylhexyl) phosphoric acid (D2EHPA) in n-octane.

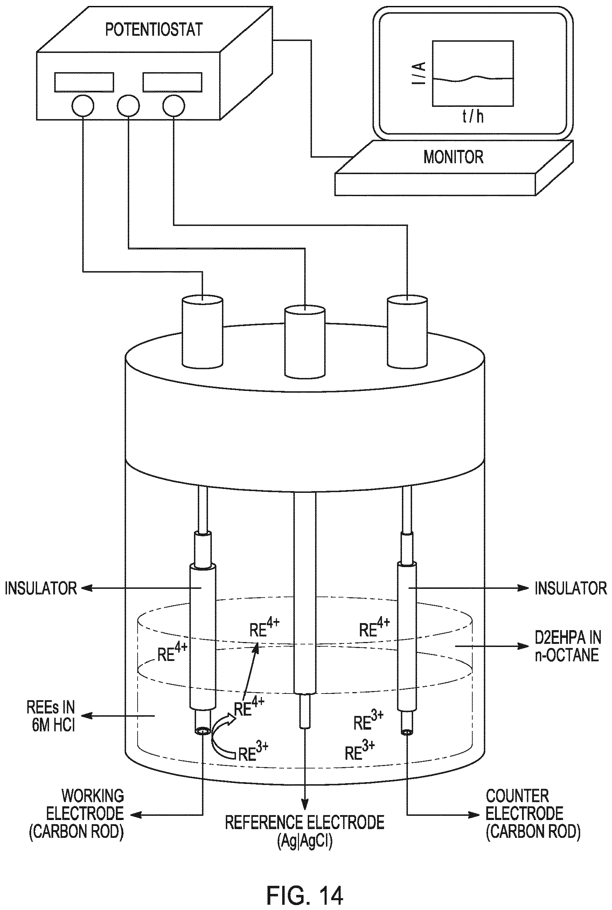

Experimental setup: A three-electrode system electrochemical cell was used in this experiment. Carbon rods were used as a working and counter electrode with Ag|AgCl as a reference electrode. The schematic of electrochemical separation is given in FIG. 14.

Experimental procedure. 50ml of LCA@AA solution was first added to the electrochemical cell, followed by 50 ml of OP solution. The electrodes were inserted in such a way that it only exposes to the aqueous phase (AP) and insulated from the OP. Once the electrochemical cell was set up, a constant potential of 1.7 V was applied for 12 h to selectively separate REE. However, during the selective electrochemical separation, REE³⁺ in AP was electrochemically oxidized to REE⁴⁺ and moved from the AP to the OP. During the experiment, the solution was stirred at 300 pm so that the generated REE⁴⁺ moved easily from the AP to OP.

After the experiment, the aqueous and organic phases were collected separately and saved in different vials.

Sample Analysis. Table 2 shows REE concentrations before and after selective electrochemical separation and the percentage recovery, as determined by ICP-MS analysis. The ICP-MS analysis of the aqueous phase sample before and after the selective electrochemical separation confirmed that 100% of scandium (Sc) and 88% of thorium (Th) were selectively separated from the rest 15 other REEs.

**Table 2. Recovery of REEs using selective electrochemical oxidation.**

| **REEs** | **REE Concentrations (ug/L)** | | **% Recovery** |
|---|---|---|---|
| | **Before Selective Electrochemical Separation** | **After Selective Electrochemical Separation** | |
| Sc | 735.1 | 0.0 | 100% |
| Y | 2183.2 | 2183.2 | 0% |
| La | 1725.5 | 1725.5 | 0% |
| Ce | 2818.1 | 2818.1 | 0% |
| Pr | 322.3 | 322.3 | 0% |
| Nd | 1193.0 | 1196.4 | 0% |
| Sm | 237.9 | 237.9 | 0% |
| Eu | 53.1 | 52.9 | 0% |
| Gd | 227.2 | 221.2 | 3% |
| Tb | 33.7 | 33.1 | 2% |
| Dy | 221.1 | 218.1 | 1% |
| Ho | 44.7 | 44.1 | 1% |
| Er | 137.8 | 134.4 | 2% |
| Tm | 18.4 | 17.9 | 3% |
| Yb | 123.1 | 118.2 | 4% |
| Lu | 19.9 | 19.4 | 2% |
| Th | 401.1 | 49.6 | 88% |

The terms and expressions that have been employed are used as terms of description and not of limitation, and there is no intention in the use of such terms and expressions of excluding any equivalents of the features shown and described or portions thereof, but it is recognized that various modifications are possible within the scope of the aspects of the present invention. Thus, it should be understood that although the present invention has been specifically disclosed by specific aspects and optional features, modification and variation of the concepts herein disclosed may be resorted to by those of ordinary skill in the art, and that such modifications and variations are considered to be within the scope of aspects of the present invention.

### Exemplary Aspects.

The following exemplary aspects are provided, the numbering of which is not to be construed as designating levels of importance:
Aspect 1 provides a method of extracting, separating, and/or purifying a metal, the method comprising:
   immersing an electrochemical cell comprising an anode and a cathode in a liquid comprising the metal to form a layer comprising the metal on the cathode, the immersing comprising applying an electrical potential across the anode and cathode.
Aspect 2 provides the method of Aspect 1, wherein the metal is in the form of an ion of the metal, a compound comprising the metal, an oxide comprising the metal, a complex comprising the metal, a salt comprising the metal, the metal is in an elemental form, or a combination thereof.
Aspect 3 provides the method of any one of Aspects 1-2, wherein the metal comprises a precious metal, a rare earth metal, or a combination thereof.
Aspect 4 provides the method of any one of Aspects 1-3, wherein the metal comprises a precious metal.
Aspect 5 provides the method of any one of Aspects 1-4, wherein the metal comprises a coinage group metal, a platinum group metal, or a combination thereof.
Aspect 6 provides the method of any one of Aspects 1-5, wherein the metal comprises gold, silver, or a combination thereof.
Aspect 7 provides the method of any one of Aspects 1-6, wherein the metal comprises ruthenium, rhodium, palladium, osmium, iridium, platinum, or a combination thereof.
Aspect 8 provides the method of any one of Aspects 1-7, wherein the metal comprises a rare earth metal.
Aspect 9 provides the method of any one of Aspects 1-8, wherein the metal comprises cerium, dysprosium, erbium, europium, gadolinium, holmium, lanthanum, lutetium, neodymium, praseodymium, promethium, samarium, scandium, terbium, ytterbium, yttrium, thulium, or a combination thereof.
Aspect 10 provides the method of any one of Aspects 1-9, wherein the liquid comprises a suspension of a solid composition comprising the metal.
Aspect 11 provides the method of Aspect 10, wherein the liquid comprises a homogeneous suspension of the solid composition comprising the metal.
Aspect 12 provides the method of any one of Aspects 10-11, wherein the solid composition comprising the metal comprises coal, coal by-product, coal ash, lignite coal ash, ore, rock, recycled materials, placer sand deposits, phosphate mine materials, mineral/metal acidic mine drainage, bauxite legacy impoundment materials, biomass, a critical mineral, or a combination thereof.
Aspect 13 provides the method of any one of Aspects 10-12, wherein the solid composition comprises coal ash.
Aspect 14 provides the method of any one of Aspects 10-13, wherein the solid composition comprises lignite coal ash.
Aspect 15 provides the method of any one of Aspects 10-14, wherein the solid composition comprises particles having a particle size of less than 1 mm.
Aspect 16 provides the method of any one of Aspects 10-15, wherein the method further comprises combining the solid composition with the liquid.
Aspect 17 provides the method of any one of Aspects 1-16, wherein the liquid is an electrolyte for the electrochemical cell.
Aspect 18 provides the method of any one of Aspects 1-17, wherein the layer comprising the metal comprises the metal in an elemental form, as a metal oxide, or a combination thereof.
Aspect 19 provides the method of any one of Aspects 1-18, wherein the anode comprises graphite, platinum, an alloy thereof, or a combination thereof.
Aspect 20 provides the method of any one of Aspects 1-19, wherein the anode comprises platinum.
Aspect 21 provides the method of any one of Aspects 1-20, wherein the cathode comprises gold, carbon paper, glassy carbon, indium tin oxide (ITO), fluoride-doped tin oxide (FTO), copper, an alloy thereof, or a combination thereof.
Aspect 22 provides the method of any one of Aspects 1-21, wherein the cathode comprises gold.
Aspect 23 provides the method of any one of Aspects 1-22, wherein the liquid is an aqueous composition.
Aspect 24 provides the method of any one of Aspects 1-23, wherein the liquid is an aqueous acid.
Aspect 25 provides the method of any one of Aspects 1-24, wherein the liquid comprises hydrochloric acid, sulfuric acid, phosphoric acid, or a combination thereof.
Aspect 26 provides the method of any one of Aspects 1-25, wherein the liquid is substantially free of water.
Aspect 27 provides the method of any one of Aspects 1-26, wherein less than 5 wt% of the liquid is water.
Aspect 28 provides the method of any one of Aspects 1-27, wherein less than 1 wt% of the liquid is water.
Aspect 29 provides the method of any one of Aspects 1-28, wherein less than 0.01 wt% of the liquid is water.
Aspect 30 provides the method of any one of Aspects 1-29, wherein the liquid comprises an ionic liquid comprising an ionic liquid anion and an ionic liquid cation.
Aspect 31 provides the method of Aspect 30, wherein the ionic liquid anion is tetrafluoroborate (BF₄), hexafluorophosphate (PF₆), bis-trifluoromethanesulfonimide (NTf₂), trifluoromethanesulfonate (OTf), dicyanamide (N(CN)₂), hydrogen sulphate (HSO₄), ethyl sulphate (EtOSO₃), a tetra(C₁-C₂₀)alkylated phosphonium, or a combination thereof.
Aspect 32 provides the method of any one of Aspects 30-31, wherein the ionic liquid anion that is tetrafluoroborate.
Aspect 33 provides the method of any one of Aspects 30-32, wherein the ionic liquid cation is a (C₁-C₂₀)alkylated nitrogen-containing heterocycle, a (C₁-C₂₀)alkylated imidazolium, a (C₁-C₂₀)alkylated pyridinium, a tetra(C₁-C₂₀)alkylated ammonium, or a combination thereof.
Aspect 34 provides the method of any one of Aspects 30-33, wherein the ionic liquid cation is 1-(C₁-C₂₀)alkyl-3-methylimidazolium, 1-ethyl-3-methyl-imidazolium (EMIM), 1-butyl-3-methyl-imidazolium (BMIM), 1-octyl-3 methyl-imidazolium (OMIM), 1-decyl-3-methyl-imidazolium(DMIM), 1-dodecyl-3-methyl-imidazolium (docecylMIM), 1-butyl-2,3-dimethylimidazolium (DBMIM), 1,3-di(N,N-dimethylaminoethyl)-2-methylimidazolium (DAMI), 1-butyl-2,3-dimethylimidazolium (BMMIM), 4-methyl-N-butyl-pyridinium (MBPy), N-octylpyridinium (C8Py), tetraethylammonium (TEA), tetrabutylammonium (TBA), or a combination thereof.
Aspect 35 provides the method of any one of Aspects 30-34, wherein the ionic liquid cation is 1-butyl-3-methylimidazolium.
Aspect 36 provides the method of any one of Aspects 30-35, wherein the ionic liquid comprises 1-butyl-3-methylimidazolium tetrafluoroborate (BMITF).
Aspect 37 provides the method of any one of Aspects 30-36, wherein the ionic liquid comprises an acid.
Aspect 38 provides the method of Aspect 37, wherein the acid is hydrochloric acid, sulfuric acid, phosphoric acid, or a combination thereof.
Aspect 39 provides the method of any one of Aspects 37-38, wherein the acid is hydrochloric acid.
Aspect 40 provides the method of any one of Aspects 37-39, wherein less than 10 wt% of the ionic liquid is the acid.
Aspect 41 provides the method of any one of Aspects 37-40, wherein less than 1 wt% of the ionic liquid is the acid.
Aspect 42 provides the method of any one of Aspects 1-41, wherein a cyclic voltammogram of the liquid comprising the metal has a relatively stable current without a sharp rise either at the start or end of the potential window.
Aspect 43 provides the method of any one of Aspects 1-42, wherein a cyclic voltammogram of the liquid comprising the metal has at least one reduction peak.
Aspect 44 provides the method of any one of Aspects 1-43, wherein a cyclic voltammogram of the liquid comprising the metal has two or more reduction peaks.
Aspect 45 provides the method of any one of Aspects 1-44, wherein a cyclic voltammogram of the liquid comprising the metal comprises four reduction peaks.
Aspect 46 provides the method of any one of Aspects 1-45, wherein a cyclic voltammogram of the liquid comprising the metal comprises a wide potential window.
Aspect 47 provides the method of any one of Aspects 1-46, wherein a cyclic voltammogram of the liquid comprising the metal comprises a potential window having a breadth of at least 0.1 V to 20 V.
Aspect 48 provides the method of any one of Aspects 1-47, wherein the electrical potential is 5 V to -5 V.
Aspect 49 provides the method of any one of Aspects 1-48, wherein the electrical potential is -0.4 to -2.0 V.
Aspect 50 provides the method of any one of Aspects 1-49, wherein the electrical potential is a constant electrical potential.
Aspect 51 provides the method of any one of Aspects 1-50, wherein the electrical potential is a variable electrical potential.
Aspect 52 provides the method of any one of Aspects 1-51, wherein the method comprises selectively extracting, separating, and/or purifying one or more rare earth metals, or one or more precious metals, from the liquid comprising the metal.
Aspect 53 provides the method of Aspect 52, wherein the selective extraction comprises applying one or more electrical potentials across the anode and cathode that favor formation of the layer on the cathode comprising one or more metals in preference to one or more other metals.
Aspect 54 provides the method of any one of Aspects 1-53, wherein the method is a batch process.
Aspect 55 provides the method of any one of Aspects 1-54, wherein the method is a continuous process.
Aspect 56 provides the method of any one of Aspects 1-55, wherein the layer comprising the metal on the cathode comprises an amount of the metal that is 0.001 wt% to 100 wt% of the metal originally present in the liquid comprising the metal.
Aspect 57 provides the method of any one of Aspects 1-56, wherein the layer comprising the metal on the cathode comprises an amount of the metal that is 1 wt% to 80 wt% of the metal originally present in the liquid comprising the metal.
Aspect 58 provides the method of any one of Aspects 1-57, wherein the layer comprising the metal on the cathode comprises an amount of the metal that is 10 wt% to 50 wt% of the metal originally present in the liquid comprising the metal.
Aspect 59 provides the method of any one of Aspects 1-58, wherein the layer comprising the metal on the cathode comprises an amount of the metal that is 20 wt% to 50 wt% of the metal originally present in the liquid comprising the metal.
Aspect 60 provides the method of any one of Aspects 1-59, wherein the layer is formed on the cathode with a recovery density rate of the metal of 0.0001 µg/m²-hr to 5 mg/m²-hr.
Aspect 61 provides the method of any one of Aspects 1-60, wherein the layer is formed on the cathode with a recovery density rate of the metal of 0.0001 µg/m²-hr to 1 mg/m²-hr.
Aspect 62 provides the method of any one of Aspects 1-61, wherein the electrical potential is applied across the anode and the cathode for a duration of 0.1 s to 1 month.
Aspect 63 provides the method of any one of Aspects 1-62, wherein the electrical potential is applied across the anode and the cathode for a duration of 0.1 h to 24 h.
Aspect 64 provides the method of any one of Aspects 1-63, wherein the electrical potential is applied across the anode and the cathode for a duration of 2 h to 8 h.
Aspect 65 provides the method of any one of Aspects 1-64, wherein during the application of the electrical potential across the anode and the cathode, the liquid comprising the metal has a temperature of room temperature to 300 °C.
Aspect 66 provides the method of any one of Aspects 1-65, wherein during the application of the electrical potential across the anode and the cathode, the liquid comprising the metal has a temperature of 50 °C to 150 °C.
Aspect 67 provides the method of any one of Aspects 1-66, wherein during the application of the electrical potential across the anode and the cathode, the liquid comprising the metal has a temperature of 80 °C to 120 °C.
Aspect 68 provides the method of any one of Aspects 1-67, further comprising removing the layer comprising the metal from the cathode.
Aspect 69 provides the method of Aspect 68, wherein the removing comprises acid digestion.
Aspect 70 provides the method of any one of Aspects 68-69, wherein the removing comprises dissolving the layer and/or the metal in the layer using an acid comprising hydrochloric acid, sulfuric acid, phosphoric acid, or a combination thereof.
Aspect 71 provides the method of any one of Aspects 68-70, further comprising purifying the metal removed from the cathode.
Aspect 72 provides the method of any one of Aspects 1-71, wherein the electrochemical cell further comprises a reference electrode.
Aspect 73 provides the method of Aspect 72, wherein the reference electrode comprises platinum.
Aspect 74 provides the method of any one of Aspects 1-73, further comprising determining whether the liquid comprising the metal is suitable prior to immersing the electrochemical cell in the liquid comprising the metal.
Aspect 75 provides the method of Aspect 74, further comprising collecting a cyclic voltammogram of the liquid comprising the metal and using the cyclic voltammogram to determine whether the liquid comprising the metal is suitable.
Aspect 76 provides a method of extracting, separating, and/or purifying a metal, the method comprising:
   immersing an electrochemical cell comprising an anode comprising platinum and a cathode comprising gold in an ionic liquid comprising the metal to form a layer comprising the metal on the cathode, the immersing comprising applying an electrical potential across the anode and cathode;
   wherein
      the metal is a rare earth metal,
      the ionic liquid comprises a suspension of a solid composition comprising the metal, and
      the solid composition comprises coal ash.
Aspect 77 provides a method of extracting, separating, and/or purifying a metal, the method comprising:
   immersing an electrochemical cell comprising an anode comprising platinum and a cathode comprising gold in an ionic liquid comprising 1-butyl-3-methylimidazolium tetrafluoroborate (BMITF), the ionic liquid comprising the metal, to form a layer comprising the metal on the cathode, the immersing comprising applying an electrical potential across the anode and cathode;
   wherein
      the metal is a rare earth metal,
      the ionic liquid comprises a suspension of a solid composition comprising the metal,
      the solid composition comprises lignite coal ash, and
      the layer comprising the metal on the cathode comprises an amount of the metal that is 20 wt% to 50 wt% of the metal originally present in the liquid comprising the metal.
Aspect 78 provides a method of determining whether the liquid comprising the metal is suitable for use in the method of any one of Aspects 1-77, the method comprising:
   collecting a cyclic voltammogram of the liquid comprising the metal, and
   selecting the liquid comprising the metal if the cyclic voltammogram shows that the liquid comprising the metal has a relatively stable current without a sharp rise either at the start or end of the potential window, at least one reduction peak, a wide potential window, or a combination thereof.
Aspect 79 provides the method of Aspect 78, comprising selecting the liquid comprising the metal if the cyclic voltammogram shows that the liquid comprising the metal has a relatively stable current without a sharp rise either at the start or end of the potential window.
Aspect 80 provides the method of any one of Aspects 78-79, comprising selecting the liquid comprising the metal if the cyclic voltammogram shows that the liquid comprising the metal has at least one reduction peak.
Aspect 81 provides the method of any one of Aspects 78-80, comprising selecting the liquid comprising the metal if the cyclic voltammogram shows that the liquid comprising the metal has two or more reduction peaks.
Aspect 82 provides the method of any one of Aspects 78-81, comprising selecting the liquid comprising the metal if the cyclic voltammogram shows that the liquid comprising the metal has four reduction peaks.
Aspect 83 provides the method of any one of Aspects 78-82, comprising selecting the liquid comprising the metal if the cyclic voltammogram shows that the liquid comprising the metal comprises a wide potential window.
Aspect 84 provides the method of any one of Aspects 78-83, comprising selecting the liquid comprising the metal if the cyclic voltammogram shows that the liquid comprising the metal comprises a potential window having a breadth of 0.1 V to 20 V.
Aspect 85 provides an apparatus for performing the method of any one of Aspects 1-77, the apparatus comprising:
   an electrochemical cell comprising an anode and a cathode.
Aspect 86 provides the apparatus of Aspect 85, wherein the anode comprises platinum.
Aspect 87 provides the apparatus of any one of Aspects 85-86, wherein the cathode comprises gold.
Aspect 88 provides the apparatus of any one of Aspects 85-87, wherein the electrochemical cell comprises a reference electrode.
Aspect 89 provides the apparatus of Aspect 88, wherein the reference electrode comprises platinum.
Aspect 90 provides the method or apparatus of any one or any combination of Aspects 1-89 optionally configured such that all elements or options recited are available to use or select from.

## Claims

1. A method of extracting, separating, and/or purifying a metal, the method comprising:
immersing an electrochemical cell comprising an anode comprising graphite, platinum, an alloy thereof, or a combination thereof, and a cathode comprising gold, carbon paper, glassy carbon, indium tin oxide (ITO), fluoride-doped tin oxide (FTO), copper, an alloy thereof, or a combination thereof, in a liquid comprising the metal, the liquid comprising an ionic liquid, to form a layer comprising the metal on the cathode, the immersing comprising applying an electrical potential across the anode and cathode.

2. The method of claim 1, wherein the metal comprises a precious metal, a rare earth metal, coinage group metal, a platinum group metal, or a combination thereof.

3. The method of claim 1, wherein the metal comprises cerium, dysprosium, erbium, europium, gadolinium, holmium, lanthanum, lutetium, neodymium, praseodymium, promethium, samarium, scandium, terbium, ytterbium, yttrium, thulium, or a combination thereof.

4. The method of claim 1, wherein the liquid comprises a suspension of a solid composition comprising the metal, wherein the solid composition is a particulate solid composition, wherein the solid composition comprising the metal comprises coal, coal by-product, coal ash, lignite coal ash, ore, rock, recycled materials, placer sand deposits, phosphate mine materials, mineral/metal acidic mine drainage, bauxite legacy impoundment materials, biomass, a critical mineral, or a combination thereof.

5. The method of claim 4, wherein the solid composition comprises lignite coal ash.

6. The method of claim 1, wherein the anode comprises platinum, and wherein the cathode comprises gold.

7. The method of claim 1, wherein less than 10 wt% of the ionic liquid is water.

8. The method of claim 1, wherein the ionic liquid comprises an acid, wherein less than 10 wt% of the ionic liquid is the acid.

9. The method of claim 1, wherein the ionic liquid comprises 1-butyl-3-methylimidazolium tetrafluoroborate (BMITF).

10. The method of claim 1,
wherein the ionic liquid comprises an ionic liquid anion that is tetrafluoroborate (BF₄), hexafluorophosphate (PF₆), bis-trifluoromethanesulfonimide (NTf₂), trifluoromethanesulfonate (OTf), dicyanamide (N(CN)₂), hydrogen sulphate (HSO₄), ethyl sulphate (EtOSO₃), a tetra(C₁-C₂₀)alkylated phosphonium, or a combination thereof, and
wherein the ionic liquid comprises an ionic liquid cation that is a (C₁-C₂₀)alkylated nitrogen-containing heterocycle, a (C₁-C₂₀)alkylated imidazolium, a (C₁-C₂₀)alkylated pyridinium, a tetra(C₁-C₂₀)alkylated ammonium, or a combination thereof.

11. The method of claim 1, wherein the layer comprising the metal on the cathode comprises an amount of the metal that is 0.001 wt% to 100 wt% of the metal originally present in the liquid comprising the metal, after applying the electrical potential across the anode and the cathode for a duration of 0.1 h to 24 h with the liquid comprising the metal having a temperature of room temperature to 300 °C.

12. The method of claim 1, further comprising removing the layer comprising the metal from the cathode.

13. The method of claim 1, wherein:
the anode comprises platinum,
the cathode comprises gold,
the metal is a rare earth metal,
the ionic liquid comprises a suspension of a solid composition comprising the metal, and
the solid composition comprises coal ash.

14. The method of claim 1, further comprising determining whether the liquid comprising the metal is suitable for use in the method, the method further comprising:
collecting a cyclic voltammogram of the liquid comprising the metal, and
selecting the liquid comprising the metal if the cyclic voltammogram shows that the liquid comprising the metal has a relatively stable current without a sharp rise either at the start or end of the potential window, at least one reduction peak, a wide potential window, or a combination thereof.

15. An apparatus for performing the method of claim 1, the apparatus comprising:
an electrochemical cell comprising the anode and the cathode immersed in the liquid.
